# FASCICULE DE BREVET EUROPEEN

(11) **EP 0 876 654 B1**
(45) Date de publication et mention de la délivrance du brevet: **06.10.1999**
(21) Numéro de dépôt: 97914370.8
(22) Date de dépôt: 12.03.1997
(51) Int. Cl.: G06K 7/08, G06K 7/10, G01S 13/02

(54) **DISPOSITIF D'ECHANGE D'INFORMATIONS SANS CONTACT AVEC UNE ETIQUETTE ELECTRONIQUE**
VORRICHTUNG ZUM KONTAKTLOSEN DATENAUSTAUSCH MIT EINEM NICHTELEKTRONISCHEN ETIKETT
DEVICE FOR CONTACTLESS DATA EXCHANGE WITH AN ELECTRONIC LABEL

(30) Priorité: 12.03.1996 FR 9603102
(43) Date de publication de la demande: 11.11.1998
(73) Titulaire: GEMPLUS S.C.A., 13881 Gémenos Cédex (FR)
(72) Inventeur: LEDUC, Michel, F-13530 Trets (FR); KALINOWSKI, Richard, F-13470 Carnoux-en-Provence (FR)
(86) Numéro de dépôt international: FR9700430
(87) Numéro de publication internationale: WO9734250

(56) Documents cités:
- EP-A- 0 589 046
- EP-A- 0 650 074
- WO-A-94/19781
- ELECTRONIQUE, no. 43, Décembre 1994, PARIS, FR, pages 67-70, XP000495148 DOMINIQUE PARET: "UTILISER UN COMPOSANT STANDARD POUR L'ETIQUETTE D'IDENTIFICATION"

## Description

L'invention concerne un dispositif d'échange d'informations sans contact avec une étiquette électronique à proximité duquel elle se trouve à un instant donné, cette étiquette étant dépourvue d'alimentation qui lui soit propre.

on entend par dispositif d'échange d'information sans contact un système qui selon les applications est soit appelé borne d'interrogation, soit lecteur. Dans tous les cas il s'agit d'appareils munis de moyens d'émission-réception aptes à émettre des signaux de lecture et/ou d'écriture de données sur une étiquette et de recevoir les signaux émis par l'étiquette en retour.

De telles étiquettes sont dites "passives", l'énergie servant à leur alimentation est dérivée de l'énergie des signaux émis par le dispositif d'échange d'informations. A cette fin, l'étiquette est munie d'une antenne de réception du rayonnement électromagnétique émis par ce dispositif, suivie d'un circuit redresseur pour dériver de ce rayonnement une tension continue d'alimentation de ses circuits internes.

L'étiquette électronique constitue un moyen de mémorisation d'informations, peu encombrant, permettant d'identifier les produits sur lesquels elle est apposée ou d'identifier la personne qui la détient.

La plus part des systèmes utilisant des étiquettes électroniques passives (dépourvues d'alimentation propre) fonctionnent en lecture seule. En effet, pour modifier des informations contenues dans une étiquette ou écrire de nouvelles informations, il faut que l'étiquette possède une mémoire programmable électriquement (PROM, EPROM, E²PROM).

Or, la tension nécessaire à la programmation de telles mémoires est relativement élevée et peut être transmise facilement dans le cas d'un contact direct, mais beaucoup plus difficilement dans le cas d'une transmission sans contact.

Il est par conséquent nécessaire que le couplage entre l'étiquette et le dispositif d'échange soit maximum. Ce couplage n'est maximum que lorsque l'étiquette se trouve très près du système d'échange.

Or, les systèmes d'échanges existant actuellement (lecteur, borne) ne possèdent aucune information sur la position de l'étiquette par rapport au champ d'excitation qu'ils émettent ni sur le sens du déplacement de l'étiquette par rapport à leur antenne (ou de leur antenne par rapport à l'étiquette).

Dans certains cas, l'étiquette possède des moyens de détection du niveau d'énergie qu'elle reçoit ou qu'elle a emmagasinée et une logique interne peut alors décider de poursuivre ou non la procédure d'écriture (qui est la plus consommatrice d'énergie) ou de poursuivre ou non la procédure de lecture.

Cependant, les moyens utilisés sont très sommaires et ne donnent des résultats qu'approximatifs. Améliorer de tels moyens à bord de l'étiquette, conduirait à des coûts prohibitifs pour la fabrication des étiquettes.

La présente invention permet de résoudre ces problèmes. Elle a pour objet un dispositif d'échange d'informations sans contact selon la revendication 1.

Selon un mode de réalisation de l'invention, les moyens d'extraction de l'information représentative de la distance comportent un circuit de détection synchrone du signal modulé émis par l'étiquette apte à délivrer un signal composite, des moyens de filtrage passe-bas, du signal composite aptes à délivrer un signal basse fréquence modulant correspondant à l'amplitude du signal basse fréquence modulant du signal modulé et des moyens de mesure de l'amplitude de ce signal basse fréquence modulant.

Avantageusement, les moyens de mesure permettent de réaliser une mesure de la valeur efficace de l'amplitude du signal.

D'autres avantages et particularités de l'invention apparaîtront clairement à la lecture de la description qui est faite à tire indicatif et nullement limitatif et en regard des dessins ci-après sur lesquels :
- la figure 1, représente le schéma de principe d'un dispositif selon l'invention,
- la figure 2, représente le schéma de réalisation d'un circuit d'extraction selon l'invention,
- les figures 3 et 4, représentent les schémas de deux exemples de réalisation d'un circuit de traitement selon l'invention,
- la figure 5, représente le schéma de la courbe V = f(Di).
- la figure 6, représente un schéma illustrant l'exploitation de la correspondance entre V et Di.

On n'a pas représenté dans le détail les circuits analogiques et numériques formant une étiquette car ils sont classiques. Cependant, on rappelle qu'une telle étiquette électronique 100 comporte des éléments tels qu'un circuit de mémorisation 110, comprenant une mémoire PROM ou EPROM ou EEPROM, un démodulateur et décodeur du signal modulé reçu fournissant des données série et un décodeur d'adressage de cette mémoire pour les opérations de lecture et d'écriture de la mémoire.

L'étiquette comporte en outre un circuit 120 de captation de l'énergie reçue pour l'alimentation de ses circuits internes. Ce circuit est également classique et comporte essentiellement une antenne, et un circuit redresseur et intégrateur.

Le dispositif d'échange 200 comporte une partie émetteur 210, récepteur 220, 230 et traitement et exploitation 240.

La partie émetteur ne sera pas détaillée ici car elle est classique. L'émetteur comporte essentiellement une antenne et des moyens de transmettre des signaux de commande ou de données sous la forme d'un signal modulé en amplitude Se autour d'une fréquence porteuse Fo.

La partie récepteur 220, 230 comporte selon l'invention un circuit d'extraction 220 d'une information V représentative de la distance qui sépare à chaque instant l'étiquette du récepteur, à partir du signal reçu Sr provenant de l'étiquette.

La distance correspond plus particulièrement à la distance qui sépare l'antenne de l'étiquette et celle du récepteur. Ce circuit 220 est suivi d'un circuit de prétraitement 222 qui a pour fonction d'effecteur un premier traitement sur l'information extraite du signal reçu consistant à déterminer la valeur de la distance correspondant à l'information V extraite en temps réel.

Un deuxième circuit de prétraitement 221 est étalement prévu, il s'agit là du circuit classique qui décode les données du signal reçu.

L'unité d'échange comporte en outre un circuit de traitement et d'exploitation 240 qui a pour fonction d'une part, de fournir les données que doit transmettre l'émetteur et d'autre part, d'exploiter les données extraites du signal reçu par le récepteur.

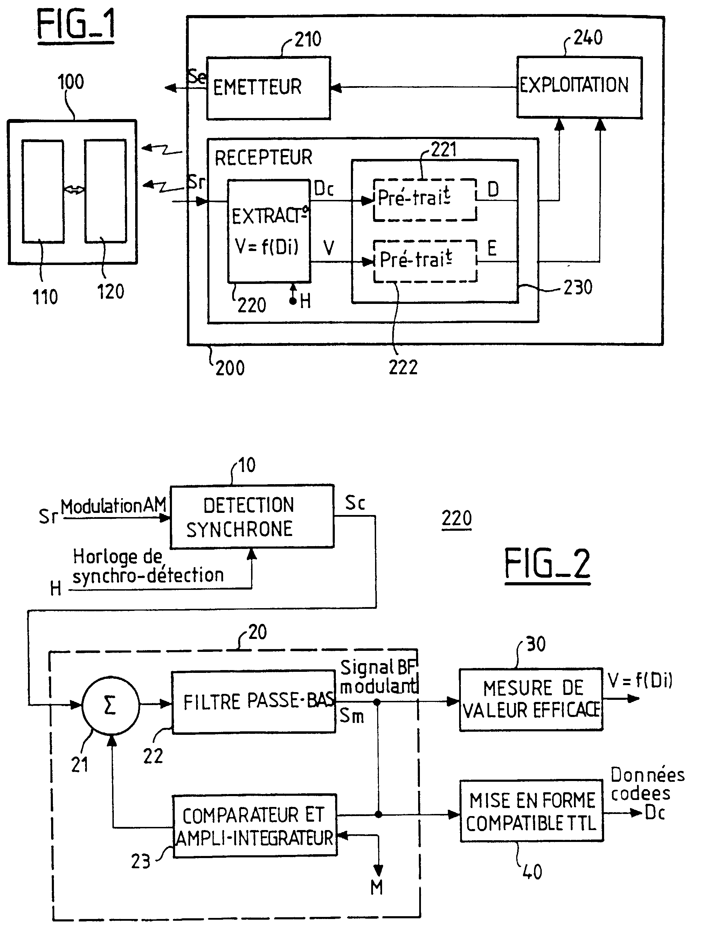

La figure 2 représente le circuit d'extraction 220 conforme à l'invention.

Ce circuit comprend un circuit de détection synchrone 10 de type connu comprenant une entrée sur laquelle est appliquée le signal Sr modulé en amplitude reçu par l'antenne (non représentée).

Sur une deuxième entrée de ce circuit est appliqué un signal d'horloge H de synchronisation de référence. Il s'agit d'impulsions d'horloge ayant la même fréquence Fo que la fréquence porteuse du signal, à amplitude et à phase contrôlées. Ce signal d'horloge est fourni par exemple à partir du générateur d'horloge de la partie émetteur.

Le détecteur délivre un signal composite Sc qui est le produit des signaux Sr et H.

Ce signal Sc est appliqué à l'entrée d'un circuit 20 de filtrage passe-bas qui délivre le signal basse fréquence modulant Sm.

Ce signal Sm correspond à la modulation apportée par l'étiquette en réponse à une commande de lecture faite par l'unité d'échange.

Le circuit 220 comprend en outre un circuit 30 de mesure de l'amplitude V du signal Sm basse fréquence modulant. L'amplitude V de ce signal est représentative de la distance Di séparant l'étiquette et le dispositif d'échange d'informations.

L'amplitude mesurée par ce circuit est de la forme V = f(Di).

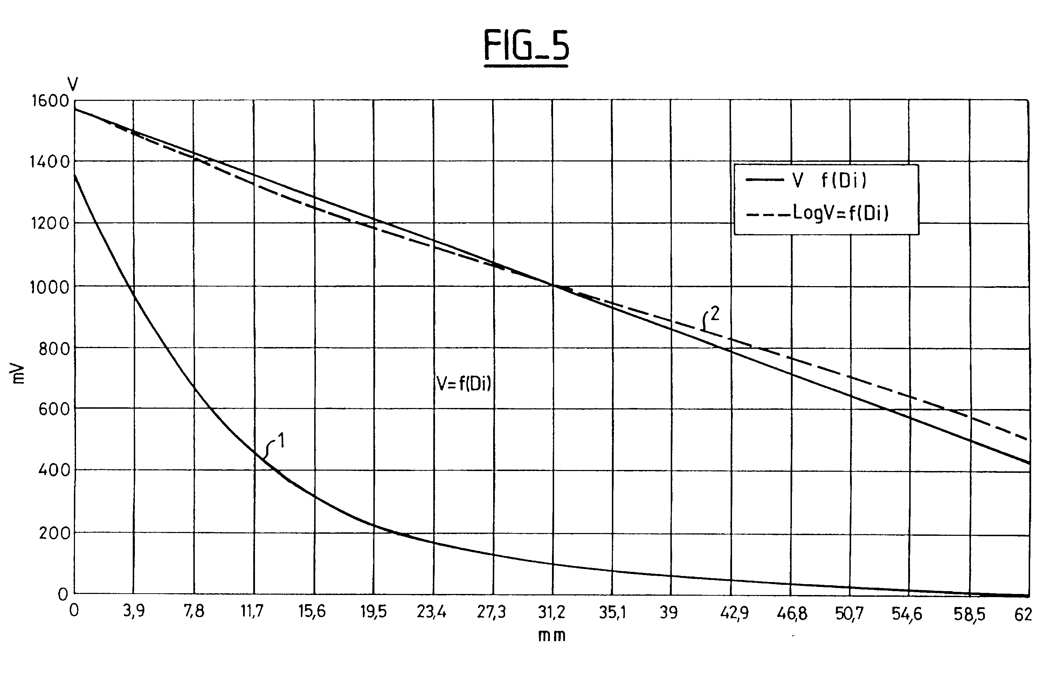

La fonction f est illustrée par la courbe 1 de variation de l'amplitude V en fonction de la distance représentée sur la figure 5.

La courbe 2 représente le logarithme de ces variations.

Le récepteur 220 comporte en outre un circuit 40 de remise en forme du signal modulant Sm pour appliquer le signal obtenu Dc à un décodeur 221, lequel transforme la modulation (biphase par exemple) en modulation binaire simple. Le signal de sortie D est appliqué au circuit de traitement et d'exploitation 240.

Le circuit de mise en forme 40 et le décodeur 221 sont classiques pour le traitement du signal Sr renvoyé par l'étiquette.

Selon un mode de réalisation avantageux, le circuit 20 comporte outre un filtre passe-bas 22, une boucle d'asservissement comprenant un comparateur 25 avec amplificateur intégrateur 23 de type connu et un mélangeur additionneur 21.

Le comparateur reçoit sur une entrée le signal Sm et sur une autre entrée un signal de référence M qui sera de préférence la masse afin de ramener la valeur moyenne de la composante BF à la masse.

De préférence, le circuit de mesure 30 est apte à fournir la valeur efficace de l'amplitude du signal. Ce circuit est de type classique, c'est-à-dire qu'il comporte une partie détection du signal avec un redresseur double alternance suivi d'un filtrage.

La valeur efficace de l'amplitude du signal Sm obtenue en sortie de ce circuit 30 est l'information extraite de Sm représentative de la distance.

L'exploitation de la correspondance entre la valeur V et la distance va permettre en premier lieu de choisir une fenêtre temporelle ou spatiale optimum pour effectuer les communications et en particulier pour réaliser les opérations d'écriture sur l'étiquette.

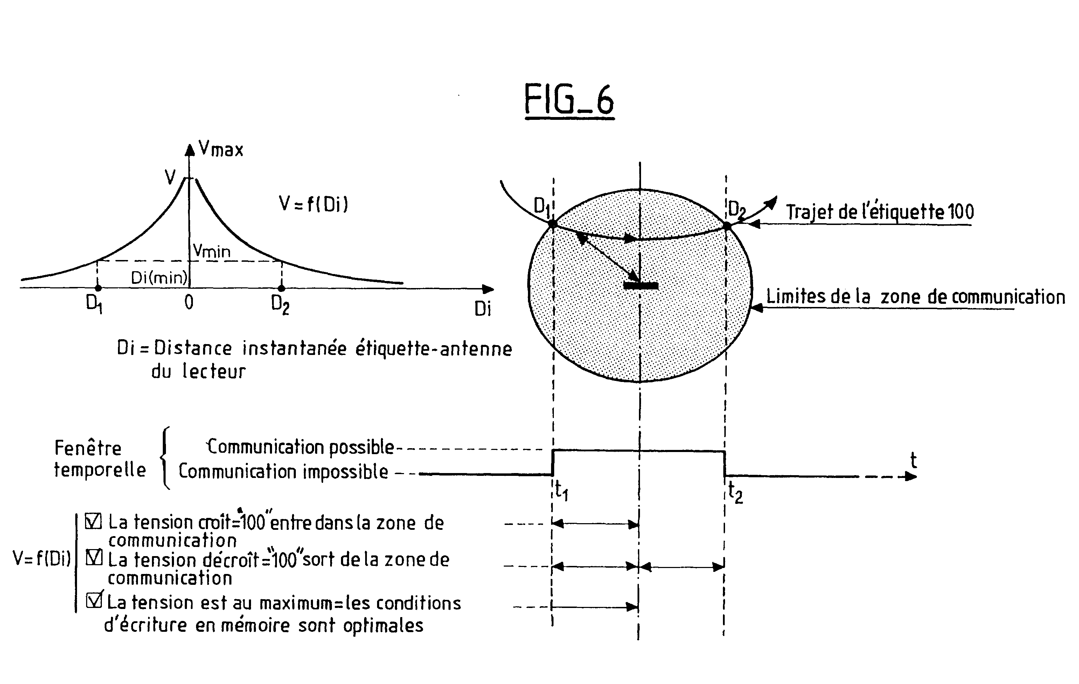

Cette exploitation est illustrée par le schéma de la figure 6 sur lequel on a représenté le trajet de l'étiquette devant l'antenne de réception du dispositif et les limites de la zone de communication. Ces limites sont fixées à partir de l'amplitude minimale Vmin du signal acceptable pour réaliser une écriture. Par symétrie, on détermine les distances D₁ et D₂ correspondant à cette valeur Vmin.

La fenêtre temporelle t₁-t₂ correspond aux instants pendant lesquels l'étiquette se trouve respectivement à la distance D₁ et à la distance D₂.

Lorsque le circuit de mesure 30 fournit en temps réel les différentes valeurs de V suivant le déplacement de l'étiquette, le circuit de prétraitement 222 détermine à partir de quel moment l'étiquette se trouve dans la fenêtre temporelle t₁-t₂ ou spatiale D₁-D₂ qui ont été prédéfinies.

Le circuit de prétraitement 222 peut alors envoyer vers l'émetteur 210 un signal E d'autorisation de poursuivre la communication. Ce signal peut être interprété par l'émetteur comme un signal d'autorisation d'écriture.

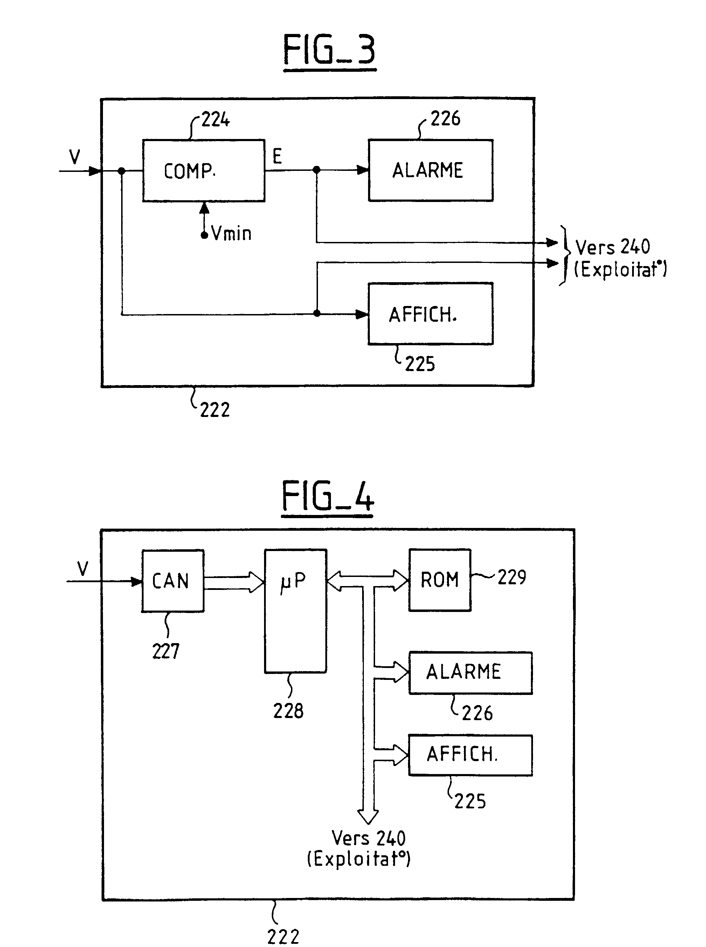

Comme cela est représenté sur la figure 3, le circuit de traitement 222 peut être réduit à un simple comparateur à seuil 224 qui délivre le signal d'autorisation E lorsque la tension V est supérieure à la tension Vmin.

Le comparateur 224 peut être relié à un dispositif d'affichage 225 de la valeur mesurée. Il peut également être relié à une alarme 226 qui avertira lorsque la communication aura échoué (Vmin jamais atteint).

Selon un autre mode de réalisation, le circuit de traitement 222 comporte un microprocesseur 228 et une mémoire de programme associée 229 tel que représenté sur la figure 4.

La mémoire de programme 229 contiendra soit la fonction f, soit une table de correspondance [V,Di] préalablement enregistrée. Le microprocesseur peut ainsi, à partir du programme contenu dans la mémoire de programme, délivrer les couples de données [V,Di]. Ces données pourront bien sur être affichées par un afficheur 225, mais elles pourront surtout être exploitées pour commander l'autorisation de poursuivre ou non la communication, pour choisir le moment approprié pour l'écriture, pour réaliser un asservissement de la position de l'étiquette.

Ces données peuvent également être traitées en vue de détecter le sens du déplacement de l'étiquette dans la zone de communication (entrée-sortie). Ce traitement consistera par exemple à prévoir le calcul de la dérivée dV/dt de la tension V dans le programme de la mémoire 229. Cette information peut être exploitée par le circuit 240 pour résoudre les problèmes de collision entre communications de plusieurs étiquettes.

L'invention s'applique à tout système d'identification électronique sans contact. Le circuit 240 pourra être avantageusement réalisé par un microprocesseur relié ou non à un dispositif externe de type microordinateur. Dans le cas où le circuit 222 comporte un microprocesseur, ce microprocesseur peut être commun au circuit de traitement et d'exploitation 240.

Dans toute la description on a parlé de déplacement de l'étiquette, mais bien entendu, l'invention s'applique également au cas où le dispositif d'échange serait déplacé devant les étiquettes qui seraient alors fixes.

D'autre part, l'invention s'applique également au cas où le rayonnement émis est un rayonnement lumineux infra-rouge.

## Revendications

1. Dispositif (200) d'échange d'informations sans contact avec une étiquette électronique, cette étiquette étant dépourvue d'alimentation propre, le dispositif comportant des moyens de réception (230) du signal modulé (Sr) émis par l'étiquette, le dispositif étant caractérisé en ce que les moyens de réception (230) comportent des moyens d'extraction (220) d'un signal (V) représentatif de la distance (Di) entre l'étiquette (100) et le dispositif (200), à partir du signal émis par l'étiquette, et des moyens de prétraitement (222) du signal (V) représentatif de la distance (Di), lesdits moyens de prétraitement étant aptes à déterminer et signaler en temps réel par un signal de signalisation (E) que le signal (V) à une valeur supérieure ou égale à une valeur prédéterminée (Vmin).

2. Dispositif d'échange d'informations selon la revendication 1, caractérisé en ce que les moyens d'extraction (220) de l'information représentative de la distance comportent un circuit de détection synchrone (10) du signal modulé (Sr) émis par l'étiquette (100) apte à délivrer un signal composite (Sc), des moyens de filtrage passe-bas (20) du signal composite aptes à délivrer un signal basse fréquence modulant (Sm) correspondant à l'amplitude du signal basse fréquence modulant du signal modulé (Sr) et des moyens de mesure (30) de l'amplitude (V) de ce signal basse fréquence modulant (Sm).

3. Dispositif d'échange d'informations selon la revendication 2, caractérisé en ce que les moyens (30) de mesure de l'amplitude du signal (Sm) basse-fréquence modulant sont constitués par un circuit de mesure de valeur efficace de l'amplitude de ce signal.

4. Dispositif d'échange d'informations selon la revendication 2, caractérisé en ce que les moyens de filtrage passe bas (20) comportent un filtre passe-bas (22) avec une boucle d'asservissement (23, 21) comprenant un comparateur intégrateur (23) dont une première entrée reçoit le signal basse fréquence modulant (Sm) de sortie du filtre (22) et dont une deuxième entrée reçoit un signal de référence (M), et un mélangeur additionneur (21) recevant sur une première entrée le signal composite (Sc) et sur l'autre entrée, un signal de sortie du comparateur (23).

5. Dispositif d'échange d'informations selon l'une quelconque des revendications précédentes, caractérisé en ce qu'il est apte à poursuivre la communication ou de l'interrompre respectivement en réponse à la présence ou à l'absence du signal de signalisation (E).

6. Dispositif d'échange d'informations selon l'une quelconque des revendications précédentes, caractérisé en ce que les moyens de prétraitement (222) comportent un comparateur de seuil (224) analogique apte à délivrer ledit signal (E) selon que le signal (V) représentatif de la distance (Di) est inférieur ou non à un seuil minimum prédéterminé (Vmin).

7. Dispositif d'échange d'informations selon l'une quelconque des revendications précédentes, caractérisé en ce que les moyens de prétraitement (222) comportent un convertisseur analogique numérique (227), une unité de traitement (228) et une mémoire de programme (229) contenant un programme permettant à l'unité de traitement de fournir en temps réel les couples distance (Di) - valeur du signal (V) représentatif de la distance (Di), et de vérifier que les valeurs dudit signal (V) sont supérieures ou égales à ladites valeur prédéterminée (Vmin).

8. Dispositif d'échange d'informations selon l'une quelconque des revendications précédentes, caractérisé en ce qu'il comporte une alarme déclenchée par ledit signal de signalisation (E) au cas où ladite valeur prédéterminée (Vmin) n'est jamais atteint.

## Patentansprüche

1. Kontaktlose Informationsaustauschvorrichtung mit einem elektronischen Etikett, wobei dieses Etikett über keine eigene Versorgung verfügt und die Vorrichtung Empfangsmittel (220) des modulierten, vom Etikett gesendeten Signals (Sr) umfasst, dadurch gekennzeichnet, dass diese Mittel (220) Extraktionsmittel (221) einer Information (V) umfassen, die die Entfernung (Di) zwischen dem Etikett (100) und der Vorrichtung (200) ab dem vom Etikett gesendeten Signal wiedergibt.

2. Informationsaustauschvorrichtung nach Anspruch 1, dadurch gekennzeichnet, dass die Extraktionsmittel der die Entfernung wiedergebenden Information eine synchrone Detektionsschaltung des modulierten, vom Etikett (100) gesendeten Signals (Sr) umfassen, die ein Verbundsignal (Sc) liefern können, Tiefpassfiltermittel (20, 21, 23) des Verbundsignals, die ein Signal (Sm) liefern können, das der Amplitude des modulierenden Niedrigfrequenzsignals entspricht, und Messmittel (30) der Amplitude (V) dieses Signals (Sm).

3. Informationsaustauschvorrichtung nach Anspruch 2, dadurch gekennzeichnet, dass die Messmittel (30) der Amplitude des modulierenden Niedrigfrequenzsignals (Sm) aus einem Messkreis des Effektiv-Wertes der Amplitude dieses Signals bestehen.

4. Informationsaustauschvorrichtung nach Anspruch 2, dadurch gekennzeichnet, dass die Tiefpassfiltermittel ein Tiefpassfilter (22) mit einem Regelkreis (23, 21) mit einem Komparator-Integrator (23) umfassen, dessen einer Eingang das Ausgangssignal (Sm) des Filters (22) empfängt, und dessen zweiter Eingang ein Referenzsignal (M) empfängt, sowie einen Mischer-Additionierer (21), der auf einem ersten Eingang das Verbundsignal (Sc) und auf dem anderen Eingang das Ausgangssignal des Komparators (23) empfängt.

5. Informationsaustauschvorrichtung nach einem der vorstehend genannten Ansprüche, dadurch gekennzeichnet, dass sie weiters Vorverarbeitungsmittel (222) des die Entfernung wiedergebenden, aus den Extraktionsmitteln (220) kommenden Signals umfasst.

6. Informationsaustauschvorrichtung nach Anspruch 5, dadurch gekennzeichnet, dass die Vorverarbeitungsmittel einen analogischen Grenzwertkomparator (224) umfassen, der ein Signal (E) liefern kann, das die Fortsetzung der Kommunikation oder ihre Unterbrechung steuern kann, je nachdem, ob die Amplitude (V) des modulierenden Niedrigfrequenzsignal kleiner ist als ein vorgegebener minimaler Grenzwert oder nicht.

7. Vorrichtung nach einem der Ansprüche 1 bis 5, dadurch gekennzeichnet, dass die Vorverarbeitungsmittel (222) einen Analog-Digital-Wandler (227), eine Verarbeitungseinheit (228) und einen Programmspeicher (229) umfassen, der ein Programm enthält, das der Verarbeitungseinheit ermöglicht, in Echtzeit die Paare Entfernung Di - Amplitude V zu liefern und zu überprüfen, dass sich diese Werte innerhalb eines Fensters von vorgegebenen Werten befinden.

8. Informationsaustauschvorrichtung nach einem der vorstehend genannten Ansprüche, dadurch gekennzeichnet, dass sie einen vom besagten Signalisierungssignal (E) ausgelösten Alarm umfasst, wenn der besagte vorgegebenen Wert (Vmin) nie erreicht wird.

## Claims

1. A contactless device for exchanging information with an electronic label, wherein said label does not have an independent power supply, and wherein said device comprises means of receiving (220) the modulated signal (Sr) emitted by the label, characterized in that said means (220) comprise means of extracting (221) information (V) that represents the distance (Di) between the label (100) and the device (200), by means of the signal emitted by the label.

2. A device for exchanging information according to claim 1, characterised in that the means of extracting information representing the distance comprise a circuit that synchronously detects the modulated signal (Sr) emitted by the label (100) capable of transmitting a composite signal (Sc); means of low-pass filtering (20, 21, 23) of the composite signal capable of transmitting a signal (Sm) corresponding to the amplitude of the modulating low-frequency signal; and means of measuring (30) the amplitude (V) of the signal (Sm).

3. A device for exchanging information according to claim 2, characterised in that the means (30) of measuring the amplitude of the modulating low-frequency signal (Sm) comprise a circuit for measuring the effective value of the amplitude of said signal.

4. A device for exchanging information according to claim 2, characterised in that the means of low-pass filtering comprise a low-pass filter (22) with an open-loop (23, 21) comprising an integrating comparator device (23) . The first input of said comparator receives the output signal (Sm) of the filter (22) and second input receives a reference signal (M). It also comprises an adder mixer (21) that receives the composite signal (Sc) on the first input and the output signal of the comparator (23) on the second input.

5. A device for exchanging information according to any one of the claims preceding, characterised in that it also comprises means of pre-processing (222) the signal that represents the distance obtained from the means of extraction (220).

6. A device for exchanging information according to claim 9, characterised in that the means of pre-processing comprise an analog threshold comparator (224) that can generate a signal (E) capable of controlling or interrupting the communication depending on whether the amplitude (V) of the low-frequency modulating signal is lower than a predetermined minimum threshold.

7. A device according to any one of claims 1 through 5, characterised in that the means of preprocessing (222) comprise an analog-digital converter (227) a processing unit (228) and a program memory (229) that contains a program which enables the processing unit to supply the Distance Di/amplitude V coupled in real time and to check that these values are within a range of predetermined values.

8. A device for exchanging information according to any one of the preceding claims, characterised in that it comprises a warning device triggered by said signaling signal (E) when said predetermined value (Vₘᵢₙ) is never reached.
